# EUROPEAN PATENT APPLICATION

(11) **EP 0 930 575 A1**
(43) Date of publication of application: **21.07.1999**
(21) Application number: 98100668.7
(22) Date of filing: 16.01.1998
(51) Int. Cl.: G06F 17/00, G06F 9/44

(54) **Method to convert dates in six- or seven-digit format into dates in eight-digit format, including two digits for the century, and methods for packing and unpacking such eight-digit dates**

(71) Applicant: Bohm, Anker Kaltoft, 3600 Frederikssund (DK)
(72) Inventor: Bohm, Anker Kaltoft, 3600 Frederikssund (DK)
(74) Representative: Roerboel, Leif

(57) **Abstract**

Year 2000 problems with dates are solved by providing a method for conversion of dates and storing the resulting dates in an unsigned packed decimal format whereby the converted dates can be stored in the storage space allocated to the original six- or seven-digit dates. Furthermore, a special procedure is provided for unpacking and packing dates in this unsigned packed decimal format providing dates in an unpacked format which can be processed by standard procedures.

Mass storage of data comprising dates in six- og seven-digit format can be converted without demanding expansion or reallocation of storage space.

## Description

The present invention relates to the problems arising when using dates with only two or three digits for indicating the year. With such dates, comparisons and calculations will not function correct when using dates before and after 1 January 2000, respectively.

This problem may be solved by providing dates comprising four digits for indicating the year. However, this means that the storage space allocated to such dates has to be expanded which in many instances may be difficult or even impossible due to the limited storage space available.

IBM® has published a guide entitled "The Year 2000 and 2-Digit Dates: A Guide for Planning and Implementation" which describes several solutions to the above problem. However, none of these solutions solve the problem in a way so that four-digit years are supported without demanding increased record lengths and accordingly increased data storage space.

The present invention presents a solution to this problem whereby four-digit-year indication for dates is provided, without requiring extra storage space for such dates.

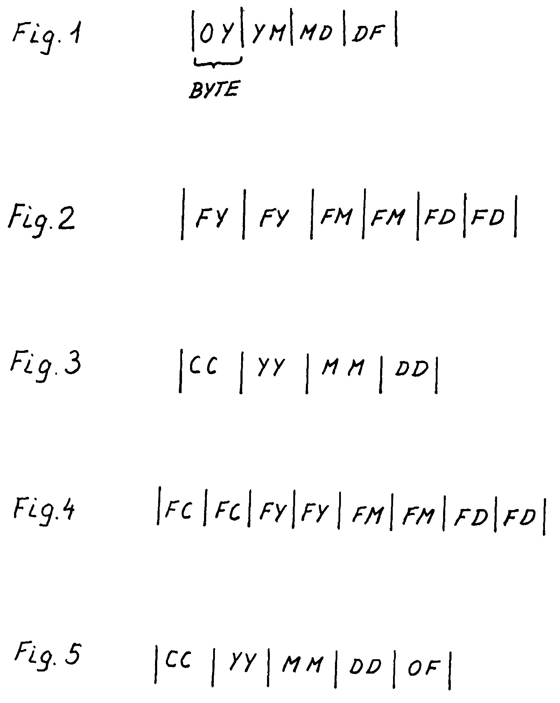

According to the invention this is achieved by a method in accordance with claim 1. By this method it is made possible to convert a date comprising only two or three digits for year indication into a date comprising four digits for year indication and to store the converted date in the storage space allocated to the original date. This is made possible by deleting the unnecessary sign half-byte to make space for storing the millennium digit. A usually used storage format for dates is the so-called packed decimal format (Fig. 1) in which a four-byte space is able to store seven digits and a sign, using one half-byte for each digit and the least significant half-byte for sign. With the method according to the invention, it is thus possible to store a full eight-digit date in these four bytes.

Furthermore, the invention provides methods for unpacking dates from and packing dates into this special format which is necessary in order to be able to display and use these dates in the usual manner. These methods are claimed in claims 2 and 3, respectively, and are designed to unpack dates from and pack dates to, respectively, this unsigned packed decimal format, to and from, respectively, the usual unpacked decimal format.

Specific features in the methods are stated in the sub-ordinate claims.

In the following, the invention will be described referring to non-limiting examples shown in the appended drawings, in which
Figure 1 shows a two-digit-year date in packed decimal format,
Figure 2 shows the date from Fig. 1 in unpacked (EBCDIC) format,
Figure 3 shows a date with a four-digit-year indication, in unsigned packed decimal format,
Figure 4 shows the date from Fig. 3 in unpacked (EBCDIC) format, and
Figure 5 shows the date of Fig. 3 and 4 in an intermediate (packed decimal) stage during packing/unpacking.

A format, which has often been used to store dates, is shown in Figure 1. In this packed decimal format comprising four bytes, the date is represented by the six digits indicated by YY, MM, and DD, and a leading zero is inserted in front of YY and a trailing F is indicating the sign (positive) in this packed decimal format. The leading zero may be substituted by a one-digit-century indication, but this will not solve the above-mentioned year 2000 problem.

Computer systems will normally comprise standard procedures for unpacking this packed decimal format into the format shown in Fig. 2. This format comprises six bytes, each indicating one digit in the date, each byte represented in the so-called EBCDIC code, in which external or unpacked decimal digits are indicated by a first half byte, the zone, equal to F and a second half byte equal to the actual digit.

If the century for the date shown in Fig. 2 is known, two digits CC indicating the century may be inserted giving the date format shown in Figure 4.

Fig. 3 shows the four-byte unsigned packed decimal format which is used for storing an eight-digit date with two digits CC for indicating century, two digits YY for indicating year, two digits MM for indicating month, and two digits DD for indicating date. It can clearly be seen that the Fig. 3 format and the Fig. 1 format both comprise four bytes and accordingly, the Fig. 3 format fits into the space allocated to the Fig. 1 format date. However, the Fig. 3 format cannot be unpacked by standard procedures which expect to find a trailing sign-half-byte in the position where the unsigned packed decimal format in Fig. 3 contains a date digit D. In order to remedy this problem, Appendix 2 provides a special procedure for packing and unpacking the special unsigned packed decimal format moving the four bytes of Fig. 3 into a packed decimal format as shown in Fig. 5, which includes five bytes, the least significant byte being set to 0 F. This packed decimal format is unpacked by using standard procedures and divided by ten giving the resulting format shown in Fig. 4. On the other hand, packing the format shown in Fig. 4 into the unsigned packed decimal format shown in Fig. 3, the Fig. 4 format date is multiplied by ten and packed by standard procedures giving the result shown in Fig. 5, which, apart from the trailing byte 0F, contains the desired unsigned packed decimal format result.

In order to use this new format in accordance with Fig. 3, it is necessary to convert all existing dates in the format in accordance with Fig. 1 to this new format which may e.g. be done by using a procedure as shown in Appendix 1. This procedure inserts the two-century digits CC in front of the six-digit dates resulting in eight-digit dates and packs these eight-digit dates in accordance with the above-mentioned procedure using e.g. the procedure shown in Appendix 2. The century digits CC inserted in the dates are 19 or 20 depending on whether the year digits YY are greater than or less than 50. The limits for using 19 or 20 for the digits CC may naturally be changed in accordance with the requirements of the application.

## Claims

1. Method to convert dates, existing in a six- or seven-digit format, and stored in a packed decimal format comprising four bytes, into dates in an eight-digit format, comprising the following steps:
a) converting the dates from the original six- or seven-digit format into the dates in the eight-digit format by inserting the millennium and, if appropriate, the century digit in dependence of the values of the existing year digits,
**characterized** by further comprising
b) storing the resulting eight-digit dates in the four bytes space originally used for storing the packed decimal format dates, using a four byte unsigned packed decimal format, in which each half-byte position, including the half-byte position formerly storing the sign, is used to store one digit of the eight digits included in the eight-digit-date format.

2. Method to unpack eight-digit dates stored in accordance with claim 1, **characterized** by comprising the following steps:
a) converting unsigned packed decimal dates into packed decimal format by inserting a least significant half-byte F, and
b) converting of the resulting packed decimal element in conventional way into unpacked decimal format.

3. Method to pack eight-digit dates into four bytes, **characterized** by comprising
a) packing the eight-digit dates into packed decimal format, resulting in a five bytes unit, including a sign half-byte and a leading zero half-byte, and
b) packing this element further by deleting the sign half-byte and the leading zero half-byte, resulting in a four byte unsigned packed decimal format.

4. Method to unpack in accordance with claim 2, **characterized** in that the sign half-byte F is inserted by inserting a byte 0F followed by a division by ten.

5. Method to pack in accordance with claim 3, **characterized** in that the deletion of the leading zero and the trailing sign half-bytes is performed by multiplying by ten and followed by deletion of the resultant least significant byte.
